# EUROPEAN PATENT APPLICATION

(11) **EP 4 130 340 A1**
(43) Date of publication of application: **08.02.2023**
(21) Application number: 21189863.0
(22) Date of filing: 05.08.2021
(51) Int. Cl.: C25B 1/04, C25B 9/19, C25B 9/73, C25B 9/77

(54) **ELECTROLYSER FRAME DESIGN**

(71) Applicant: Industrie De Nora S.p.A., 20134 Milano (IT)
(72) Inventor: Liuzzo, Mirko, 22040 Brenna (CO) (IT); Nuzzo, Daniele, 20134 Milano (IT); Perego, Michele, 20134 Milano (IT)
(74) Representative: Reitstötter Kinzebach

(57) **Abstract**

The present invention concerns an electrolyser and a method for producing the same. The electrolyser comprises at least two electrolytic cells respectively provided with anodic and cathodic frames where the frames are equipped with feed and discharge channels that reduce stray currents and facilitate cell assembly. The electrolyser may be advantageously employed for high pressure alkaline water electrolysis (AWE).

## Description

### FIELD OF THE INVENTION

The present invention concerns an electrolyser comprising at least two electrolytic cells respectively provided with anodic and cathodic frames; the frames being equipped with a feed/discharge channel design that reduces stray currents and facilitates cell assembly. The electrolyser may be advantageously employed for alkaline water electrolysis (AWE).

### BACKGROUND OF THE INVENTION

Electrochemical industrial applications often require electrolysers comprising a plurality of electrochemical cells, electrically and hydraulically connected with each other, each cell being provided with opposite electrodes facing each other and immersed in a current conductive liquid media, the electrolyte. This basic configuration of mutually connected conductive elements represents a complex electric network that may lead to uncontrolled stray currents. The latter may cause power loss, deterioration of the electrolyser equipment and/or cause hazard to the operating personnel.

In many industrial electrolysers, the individual electrodes are housed within a supporting frame and the electrolyte is fed to the electrode and subsequently discharged via one or more channels, or manifolds, that in some instances may traverse each frame.

In a variety of applications, such as for instance industrialized pressurized AWE electrolysers with internal manifolds, the feed and discharge channels are mostly manufactured by drilling cylindrical channels within the cell frames, or by molding the frames with the use of mobile parts, thereby creating a direct straight hydraulic connection between the manifolds and the active area of the electrode.

In the above scenarios, it is extremely hard to manufacture channels with geometries that depart from the straight line. The latter is, in practice, the only viable option for mass production of the frame channels when using the aforementioned techniques. In this case, the overall length of the feed/discharge channels created within the frames will not exceed the distance between the manifolds and the electrode compartment.

The ensuing limited length of the feed and discharge channels has a negative impact on the electrolyser performance.

First, when the cells are in hydraulic parallel configuration, the pressure loss of the manifolds may determine a higher electrolyte flow in the first cells with respect to the last ones. This, in turn, may cause detrimental effects such as overheating or gas accumulation inside the cell.

Second, short channels may favor high stray currents throughout the electrolyte circuit. In fact, the electrical resistance of the electrolyte circuit can be considered, at least in first instance, roughly proportional to its length, so a shorter circuit will have a lower electrical resistance. Since the electrolyte circuit is electrically in parallel with the stack of cells, decreasing its resistance will increase the stray current flowing across the system, while decreasing the current actually flowing through the cells. As a consequence, the stray currents will negatively impact on the overall electrolyser performance.

Aim of the present invention is to reduce the stray currents in the electrolyte circuit and to ensure an improved electrolyte flow across the electrolyser, thereby overcoming the shortcomings of the electrolysers known in the art.

### DETAILED DESCRIPTION

Under one aspect, the present invention relates to an electrolyser comprising at least two electrolytic cells, each electrolytic cell comprising an anodic half-cell equipped with an anode, a cathodic half-cell equipped with a cathode, and a separator arranged between the anode and the cathode. The cathodic and the anodic half-cells are respectively provided with a cathodic frame and an anodic frame, which accommodate a cathode and an anode.

Each frame is provided with an inner and outer surface. The frames are mutually arranged with respect to each other so that the inner surface of the anodic frame faces the inner surface of the cathodic frame.

The anodic frame and the cathodic frame each comprise a feed inlet and a feed outlet connected via a feed channel for feeding the electrolyte from an anodic and a cathodic manifold respectively into the anodic and cathodic compartments (i.e. the enclosures that are formed around the electrodes by the separator and the frame and that are filled with the electrolyte).

The anodic frame and the cathodic frame each comprise a discharge inlet and a discharge outlet for discharging the electrolyte respectively from the anodic compartment and from the cathodic compartment into the manifold, and the discharge inlet and the discharge outlet are connected via a discharge channel.

According to the present invention the anodic and cathodic feed and discharge channels are all created over the inner surface of the anodic frame. Furthermore, the anodic feed outlet and the anodic discharge inlet abut on the external surface of the anodic frame; and the cathodic feed outlet and the cathodic discharge inlet abut on the external surface of the cathodic frame.

With the term channel it is meant any receded or raised profile, either closed or open along its length. In case the channel is open along the direction of electrolyte flow, it becomes suitable for flowing liquids once it is set or pressed against a surface or any other element closing its open side.

The inlet and outlet of each feed and discharge channel shall be understood to coincide with the peripherical sections of the channel that are respectively placed in correspondence of the entrance and of the exit of the channel, where the terms "entrance" and "exit" refer to electrolyte flow when the electrolyser is operating.

Without prejudice to the scope of the claimed invention, the frame may comprise a plurality of feed inlets and feed outlets connected by corresponding feed channels, and/or a plurality of discharge inlets and discharge outlets connected by corresponding discharge channels.

The anodic and cathodic frames may be made of any suitable insulating material to be chosen by the skilled person in accordance with the characteristics of the electrolyte and the operating conditions of the electrolyser. Materials such as engineering plastics, and specifically PTFE, PSU, PPS, PEEK and PPA, have been found by the inventors to work particularly well in AWE and Anion Exchange Membrane Water Electrolysis (AEM-WE) applications.

In alternative, the anodic and cathodic frames may be made of a composite material. The material may comprise a conductive core, to ensure a greater mechanical strength, covered with an insulating material.

The anodic and cathodic frames may be obtained by any suitable technique, such as by milling or machining sheets, or by molding, 3D printing, or a combination thereof.

The anodic and cathodic feed and discharge channels may be obtained by any technique suitable to form a receded or raised channel profile with respect to the surface of the corresponding frame and apt to depart from a straight line. Advantageous techniques, because of their availability and flexibility, may include engraving, milling, molding, 3D printing, machining or combinations thereof.

The sealing of each channel may be achieved by appropriately placing a gasket along the channel contour. The gasket may be positioned either on the same surface of the channel, along its profile, or on the opposite frame facing said channel, mirroring its profile.

In alternative to the channel manufacturing techniques above, the channel profiles may be created by applying, molding, or printing suitably shaped ridges over the surface of the frame. In some instances, these ridges may also take the function of a gasket to ensure appropriate sealing of the channel besides conveying the electrolyte flow.

The channel design of the electrolyser according to the present invention has been found to promote an easier and more streamlined electrolyser assembly. Indeed, since for a given channel the channel inlet is always on the opposite surface of the channel outlet, the gaskets sealing those channels don't cross over the other gaskets sealing the other elements of the cell, such as the separator, the current collector and/or the bipolar plates, where present. Additionally, with the presently described techniques and channel design, much longer and/or thinner channels can be obtained, and with more complex shapes, taking full advantage of the free surface of the frame and overcoming the drawbacks of the straight and short channels known in the art.

The electrolytic cells may be electrically connected in series, and/or hydraulically connected in parallel through an internal manifold circulating the electrolyte.

It is understood that the conductive liquid media composition circulating within the anodic compartment, i.e. the anolyte, may differ from that circulating within the cathodic compartment, i.e. the catholyte. In the present application these compositions are generically referred to, either collectively or individually, as the electrolyte.

In general, the anodic and cathodic feed inlets and the discharge outlets are hydraulically connected to the respective internal or external manifolds.

Internal manifolds can be successfully employed, for example, in electrolysers for pressurized AWE, i.e. electrolysers operating at a pressure above or equal to 5 bar, as opposed to the external manifold design of atmospheric electrolysers, and they are typically associated with very short feed and discharge channels for each cell.

Under one embodiment, the anodic/cathodic feed and discharge channels of the electrolyser according to the invention perform at least 1 change in direction along the inner surface of the anodic and cathodic frames respectively. Preferably, the number of changes in direction is equal to or above 2, and even more preferably is in the range of 2-50.

The changes in direction signify departing from a straight-line geometry, which allows longer channel designs and to take advantage of the free surface of the frame, thus reducing stray currents and their negative impact on the electrolyser performance, as well as improving electrolyte flow across the electrolyser.

Preferably, the electrolyser according to the invention is characterized by anodic and cathodic feed and discharge channels that have an overall length of at least twice the distance L_{M-C} between the manifold and the anodic/cathodic compartment. Preferably the cathodic feed and discharge channels have an overall length of 2 - 50 L_{M-C}.

It is known that the circuit resistance is also affected by the cross section of the channels. The claimed invention allows the skilled person to appropriately reduce the cross section of the channel, by taking into account relevant parameters, such as channel length, number of cells, electrolyte resistance and current load.

Under a further embodiment, the separator in the electrolyser according to the invention is a diaphragm or a membrane, and/or each of said electrolytic cells is optionally arranged in a zero-gap configuration.

Under a further embodiment, the anode and/or the cathode of the electrolyser according to the present invention are a foraminous structure or a continuous sheet of conductive material, preferably made of titanium, nickel, iron or alloys thereof, and optionally coated with one or more catalytic and/or protective layers.

By foraminous structure it is meant any rigid or flexible conductive element provided with through or blind holes, such as, without limitation, expanded meshes, woven meshes, punched sheets, perforated sheets, louvers and any other spongy, porous, pierced conductive structure suitable to operate as an electrode.

Under one embodiment, in the electrolyser according to the present invention, the feed outlets and the discharge inlets of the anodic and cathodic compartments are connected to an array of distribution channels, optionally in hydraulic parallel configuration with each other, created over the external surface of the anodic and cathodic frame respectively. Under a further aspect, the present invention relates to the use of the electrolyser hereinbefore described for AWE applications, and even more advantageously for high pressure AWE applications, i.e. applications where the electrolyser operates at a pressure above or equal to 5 bar.

Under a further aspect, the present invention relates to the use of the electrolyser hereinbefore described for AEM-WE applications.

A number of embodiments of the invention are described by way of example below with reference to the appended drawings, the purpose of which is solely to illustrate the mutual arrangement of the various elements relating to certain embodiments of the invention. The drawings are schematic representations and are not drawn to scale. However, same numbers correspond to essentially the same functional elements.

### DESCRIPTION OF FIGURES

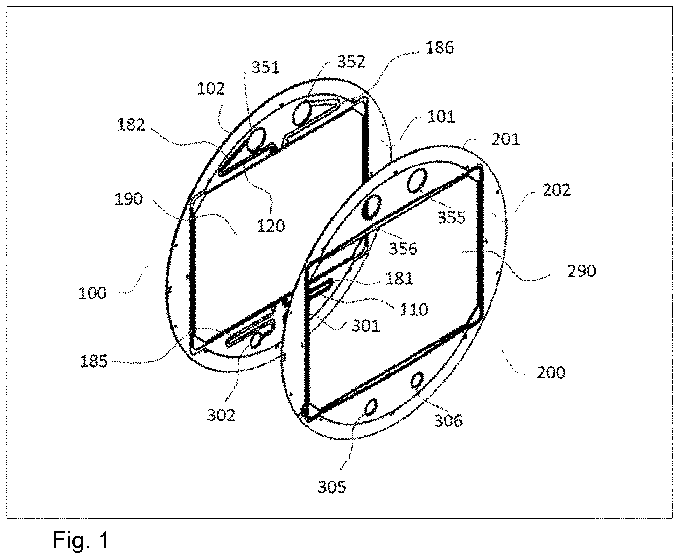

Fig. 1 illustrates an anodic and cathodic frame (100, 200) having an inner surface (101, 201) and outer surface (102, 202), where the inner surface (101) of the anodic frame (100) is facing the inner surface (201) of the cathodic frame (200). Each frame provides a housing for accommodating the respective electrode (not shown), which is to be placed in correspondence of the frame's central empty space (190, 290). A separator (not shown) may be placed between the two opposite electrodes. The space (190, 290) may roughly determine the enclosure that is formed by the separator and the frame around the electrode (i.e. the electrode compartment), which is filled with electrolyte circulating during operation. The anodic frame (100) comprises a feed inlet that feeds the electrolyte from the manifold aperture (301) (covered in the figure) to the feed outlet through a feed channel (110), and eventually reaches the anodic compartment.

The anodic frame (100) also comprises a discharge channel (120) for discharging the electrolyte from the anodic compartment into the manifold aperture (351) through a discharge inlet and a discharge outlet, respectively placed at the electrolyte flow entrance and exit of the discharge channel.

The cathodic feed and discharge channels (not shown) are on the inner surface (201) of the cathodic frame and are respectively connected to the manifold apertures (305) and (355). In the illustrated embodiment, the anodic feed and discharge channels (110, 120) and the cathodic feed and discharge channels (210, 220) are grooves, i.e. receded openings, traced on the inner surface of the respective frames (100, 200), and are therefore open along their greater length.

The anodic feed and discharge channels (110, 120) are respectively contoured with gaskets (181, 182), which are placed along their profile to ensure proper sealing.

In the presently illustrated embodiment, the gaskets (185, 186) of the cathodic feed and discharge channels are placed on the inner surface (101) of the anodic frame, in order to advantageously speed up the cell assembly. The gaskets (185,186) also contour the manifold apertures (302, 352) of the anodic frame (100) and they are shaped so as to mirror the profile of the cathodic feed and discharge channels traced on the opposite inner surface (201) of the cathodic frame (200). When the two frames (100) and (200) are pressed together, the gaskets (181, 182, 185, 186) adhere to both inner surfaces (101) and (201), thereby closing all the anodic/cathodic feed/discharge channels and ensuring leak-tight sealing of the same.

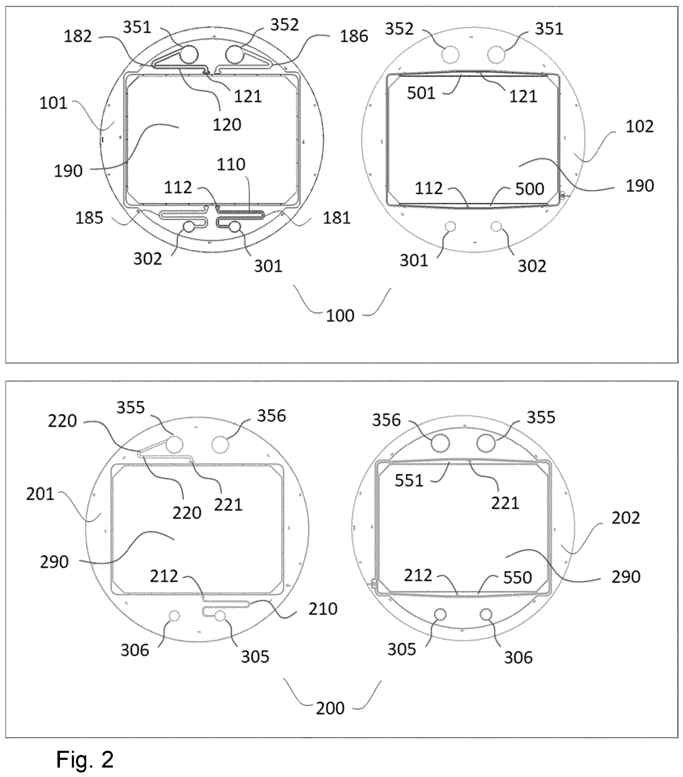

Fig. 2 provides an alternative view of the anodic frame (100) and cathodic frame (200) sketched in Fig. 1, exposing both the internal surfaces (101, 201) and external surfaces (102, 202) of the frames in a multiview mode.

The frames (100, 200) are provided with through holes (301, 302, 305, 306, 351, 351, 355, 356). These apertures, equipped with appropriate gaskets, compose the internal manifolds once all the frames of the adjacent cells of the electrolyser are pressed against each other. The manifolds ensure circulation of the electrolyte, with the gaskets preventing any spills and providing leak tight sealing even under pressure.

The anodic feed and discharge channels (110, 120) are visible on the internal surface (101) of the anodic frame (100), and the cathodic feed and discharge channels (210, 220) are visible on the internal surface (201) of the cathodic frame (200).

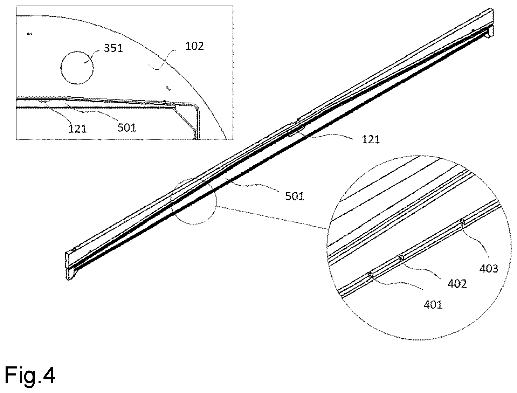

The anodic feed channel (110) contributes to deliver the electrolyte from the manifold aperture (301) to the anodic compartment. The electrolyte exits the feed channel through the anodic feed outlet (112), which abuts on the external surface (102) of the anodic frame. From there, the electrolyte reaches the anodic compartment, in correspondence of the space (190), either directly or through an appropriately designed path or a plurality thereof. For instance, a collector (500) placed in hydraulic communication with an array of channels (not visible) reaching the space (190) may be used, in analogy with the design further detailed in Fig.4.

The cathodic feed channel (210) contributes to deliver the electrolyte from the manifold (305) to the cathodic compartment. The electrolyte exits the feed channel through the cathodic feed outlet (212), which abuts on the external surface (202) of the cathodic frame. From there the electrolyte reaches the cathodic compartment in correspondence of space (290) either directly or through an appropriately designed path or a plurality thereof. For instance, a collector (550) placed in hydraulic communication with an array of channels (not visible) reaching the cathodic compartment may be used, in analogy with the design detailed in Fig.4.

The anodic/cathodic discharge channel (120)/(220) contributes to deliver the electrolyte from the anodic/cathodic compartment to the manifold aperture (351)/(355). The electrolyte enters the anodic/cathodic discharge channel (120)/(220), which is placed on the anodic/cathodic internal surface (101)/(201), from the external surface (102)/(202) of the anodic/cathodic frame through the anodic/cathodic discharge inlet (121)/(221). From the enclosure (190)/(290), the electrolyte may be collected towards the discharge inlet (121)/(221) either directly or through an appropriately designed path or a plurality thereof. For instance it is possible to use a collector (501)/(551) connected to the compartment situated in correspondence of the space (190)/(290) through an array of channels abutting thereon, in analogy with the design detailed in Fig.4.

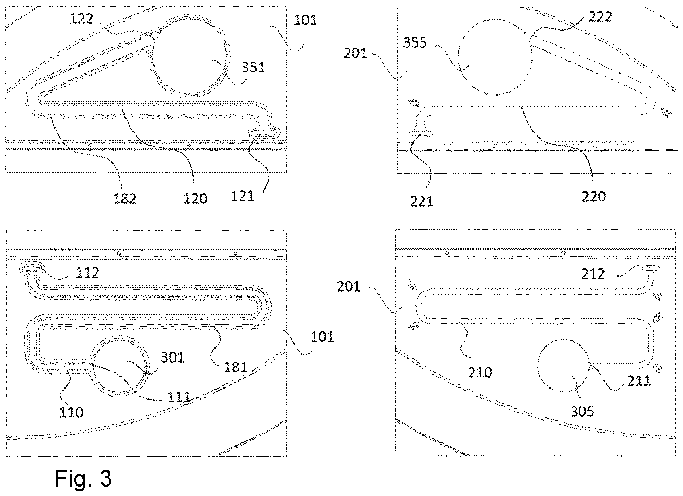

Fig. 3. provides a close-up view of the anodic feed and discharge channels (110, 120) of Fig. 1. The anodic feed inlet (111) and the anodic discharge outlet (122) are on the internal surface of the anodic frame, i.e. these sections are at least partially contained within, or bordering on, the inner surface (101) of the frame (100). The anodic feed and discharge channels (110, 120) are grooves traced on the inner surface (101), they are open along their length and receded with respect to the inner surface (101). The anodic feed outlet (112) and the anodic discharge inlet (121) abut on the external surface of the anodic frame (not shown).

The cathodic feed inlet (211) and the cathodic discharge outlet (222) are on the internal surface of the cathodic frame, in that the entrance section of the channel is contained within the inner surface (201). The cathodic feed and discharge channels (210, 220) are grooves traced on the inner surface (201): they are not closed along their length and are receded with respect to the cathodic inner surface (201). The cathodic feed outlet (212) and the cathodic discharge inlet (221) abut on the external surface of the cathodic frame (not shown).

The grey arrows indicate the 5 changes in direction of the cathodic feed channel (210) and the 2 changes in direction of the cathodic discharge channel (210).

Fig.4 provides a close-up view of a specific embodiment of the present invention, where the active area of the anode (not shown) is placed in hydraulic connection with the discharge inlet (121) via an array of channels (401, 402, 403, ...) that convey the electrolyte from the anodic compartment into the collector (501) and into the discharge inlet (121). From there, the electrolyte flows into the discharge channel as depicted into the preceding figures.

### EXAMPLE 1

An electrolyser for AWE applications was designed for operating at a pressure of 30 bar. The electrolyser comprises 100 electrolytic cells electrically connected in series. The cells are hydraulically connected in parallel through four internal manifolds for the circulation of an electrolytic solution. The latter consists of an aqueous solution of KOH 30% having an electrical conductivity of roughly 140 S/m at 80°C.

The electrolyser was designed to run at a current density of 10 kA/m².

Each electrolytic cell comprises an anodic half-cell equipped with an anode consisting of an activated nickel expanded mesh and a cathodic half-cell equipped with an activated nickel woven mesh as the cathode.

Each electrode is housed within a frame of circular shape with an overall diameter of 1,5 m and a thickness of 10 mm that exposes a cell active area of 1 m².

A diaphragm is arranged between the opposite electrodes in a zero-gap configuration. Leakages are prevented through an appropriate disposal of gaskets between and on these elements.

Each electrode is electrically connected to the respective bipolar plate through a current collector.

They frames are made of PPS and manufactured by milling plastic sheets.

The anodic/cathodic feed channels are also manufactured with a milling technique and form a receded path of 500 mm in length, 10 mm in width and 4 mm in depth over the anodic/cathodic inner surface. These channels exhibit 5 changes in direction in analogy with the design depicted in Fig 3 and deliver the electrolyte from the feed inlet on the internal surface of the frame to the feed outlet on the external surface of the same. From the feed outlet, the electrolyte reaches the electrode compartment through a collector and an array of channels as illustrated in Fig. 4.

The anodic/cathodic discharge channels are also manufactured with a milling technique and form a receded path of 500 mm in length, 20 mm in width and 4 mm in depth over the anodic/cathodic inner surface. These channels exhibit 2 changes in direction as depicted in Fig 3 and deliver the electrolyte from the discharge inlet on the external surface to the discharge outlet connected to the manifold on the inner surface of the respective frames. The electrolyte from the electrode compartment reaches the discharge inlet through a collector and an array of channels similar to the design depicted in Fig. 4. The gaskets preventing leakage from the anodic/cathodic feed/discharge channels are placed as depicted in Fig.1 and 2.

Table 1 shows the stray currents calculated for this electrolyser design at different current densities (CD), expressed as percentage of the overall available current load.

The stray currents calculated for this electrolyser design at the design current density amount to 0.5% of the overall available current load.

**Table 1.**

| | | | | | |
|---|---|---|---|---|---|
| CD [kA/m²] | 2 | 4 | 6 | 8 | 10 |
| Stray current (%) | 2.1 | 1.1 | 0.8 | 0.6 | 0.5 |

### COUNTEREXAMPLE 1

An electrolyser is designed according to EXAMPLE 1 except the following differences. The anodic/cathodic frames, made of PPS, are manufactured by milling plastic sheets. The anodic/cathodic feed/discharge channels are made by drilling a straight through hole within the frame connecting the manifold to the anodic/cathodic compartments.

The anodic/cathodic feed channels are 50 mm long.

The present electrolyser is operated under the same conditions of EXAMPLE 1.

Table 2 shows the stray currents calculated for this electrolyser design at different current densities, expressed as percentage of the overall available current load.

The stray currents calculated for this electrolyser design at the design current density amount to 1.4% of the overall available current load.

**Table 2.**

| | | | | | |
|---|---|---|---|---|---|
| CD (kA/m²) | 2 | 4 | 6 | 8 | 10 |
| Stray current (%) | 5.9 | 3.1 | 2.2 | 1.7 | 1.4 |

The preceding description, including its examples, is not intended to limit the invention, which may be used according to various embodiments without however departing from its general principles, and whose scope is uniquely defined by the appended claims.

In the description and in the claims of the present application, the terms "comprising", "including" and "containing" are not intended to exclude the presence of other additional elements, components, or process steps.

The discussion of documents, items, materials, devices, articles and the like is included in this description solely with the aim of providing a context for the present invention. It is not suggested or represented that any or all of these topics formed part of the prior art or formed a common general knowledge in the field relevant to the present invention before the priority date for each claim of this application.

## Claims

1. An electrolyser comprising at least two electrolytic cells, each electrolytic cell comprising an anodic half-cell equipped with an anode, a cathodic half-cell equipped with a cathode, and a separator arranged between said anode and said cathode;
the cathodic and the anodic half-cells being respectively provided with an anodic frame (100) and a cathodic frame (200), each frame having an inner and outer surface, the inner surface (101) of the anodic frame facing the inner surface (201) of the cathodic frame; the anodic frame and the cathodic frame each comprising a feed inlet (111, 211) and a feed outlet (112, 212) for feeding the electrolyte into the anodic compartment and into the cathodic compartment respectively, the feed inlet and the feed outlet being connected via a feed channel (110, 210);
the anodic frame and the cathodic frame each comprising a discharge inlet (121, 221) and a discharge outlet (122, 222) for discharging the electrolyte out of the anodic compartment and out of the cathodic compartment respectively, the discharge inlet and the discharge outlet being connected via a discharge channel (120, 220);
**characterized in that**
the anodic feed and discharge channels (110, 120) are created over the inner surface (101) of the anodic frame;
the cathodic feed and discharge channels (210, 220) are created over the inner surface (201) of the cathodic frame (200);
the anodic feed outlet (112) and the anodic discharge inlet (121) abut on the external surface (102) of the anodic frame (100);
the cathodic feed outlet (212) and the cathodic discharge inlet (221) abut on the external surface (202) of the cathodic frame (200).

2. The electrolyser according to claim 1 wherein said anodic and cathodic feed and discharge channels exhibit at least 1 change in direction along the inner surface of the anodic and cathodic frames respectively.

3. The electrolyser according to claim 1 or 2 wherein said at least two electrolytic cells are hydraulically connected through an internal manifold and said anodic and cathodic feed and discharge channels have an overall length of at least twice the distance L_{M-A} between the internal manifold and the electrode compartment, and preferably have an overall length of 2 - 50 L_{M-C}.

4. The electrolyser according to any of the preceding claims wherein said separator is a diaphragm or a membrane.

5. The electrolyser according to any of the preceding claims, wherein each of said electrolytic cells is arranged in a zero-gap configuration.

6. The electrolyser according to any of the preceding claims, wherein said anode and/or said cathode is a foraminous structure or a slab of conductive material.

7. The electrolyser according to any of the preceding claims, wherein the feed outlets of the anodic and cathodic compartments are connected to a collector (500, 501, 550, 551) and to an array of distribution channels (401, 402, 403) created over the external surface of the anodic and cathodic frame respectively.

8. Use of the electrolyser according to any of the preceding claims for performing alkaline water electrolysis or for anion exchange membrane water electrolysis applications.

9. A process for manufacturing the electrolyser according to any one of claims 1-7, wherein the anodic and cathodic frames are manufactured by milling or machining sheets, or by molding, 3D printing, or a combination thereof.

10. The process according to claim 9, wherein said anodic and cathodic feed and discharge channels are obtained by any of the following methods: engraving, milling, molding, 3D printing, machining or any combinations thereof.
